# EUROPÄISCHE PATENTANMELDUNG

(11) **EP 4 461 675 A1**
(43) Veröffentlichungstag der Anmeldung: **13.11.2024**
(21) Anmeldenummer: 24175233.6
(22) Anmeldetag: 10.05.2024
(51) Int. Cl.: B65G 21/20, B65H 5/22

(54) **ENERGIEEFFIZIENTES VAKUUMTRANSPORTBAND**

(30) Priorität: 11.05.2023 DE 102023112468
(71) Anmelder: Bundesdruckerei GmbH, 10969 Berlin (DE)
(72) Erfinder: Iphöfer, Alexander, 32429 Minden (DE); Tielker, Florian, 31655 Stadthagen (DE); Schneider, Helmut, 49328 Melle (DE)
(74) Vertreter: Mammel und Maser Patentanwälte PartG mbB

(57) **Zusammenfassung**

Die Erfindung betrifft ein Vakuumtransportband (10), bei dem sich durch Auflegen eines Transportobjekts (12) ein zum Halten des Transportobjekts (12) erzeugter Unterdruck (30) erhöht. Hierdurch entsteht eine erhöhte Reibung beim Antrieb des Vakuumtransportbands (10), da es stärker in Richtung der mechanischen Strukturen (20) gezogen wird, über die es mit dem Unterdruck (30) versorgt wird. Die erhöhte Reibung wird dadurch kompensiert, dass der Unterdruck (30) erfasst wird und ein für den Unterdruck (30) maßgeblicher Luftvolumenstrom verringert wird. (siehe hierzu Figur 1)

## Beschreibung

Die vorliegende Erfindung betrifft ein Vakuumtransportband und ein Verfahren zum Betrieb eines Vakuumtransportbands. Ferner betrifft die Erfindung eine Produktionsanlage, die ein Vakuumtransportband umfasst.

Vakuumtransportbänder sind an sich gut bekannt und finden in vielerlei Hinsicht Anwendung, bspw. in der Produktion und Logistik. In der Regel umfasst ein Vakuumtransportband einen antreibbaren Bandkörper. Solche Bandkörper werden der Einfachheit halber häufig auch direkt als das Vakuumtransportband bezeichnet. Das Vakuumtransportband ist mit Vakuumkanälen versehen. Dabei handelt es sich um durchgängige Strömungsöffnungen, durch die ein Fluid strömen kann. In der Praxis wird in der Regel Luft dieses Fluid bilden, welche die Umgebung des Vakuumtransportbands bildet. Die Strömung wird durch eine Vakuumquelle bewirkt, die das Fluid durch die Vakuumkanäle saugt. Der Begriff des Vakuums ist dabei generell nicht wörtlich aufzufassen. Vielmehr handelt es sich um einen Unterdruck an dem der Vakuumquelle bzw. Unterdruckquelle fluidtechnisch zugewandten Seite des Bandkörpers (hierin auch "Saugseite" genannt) gegenüber der Seite des Bandkörpers, die der Vakuumquelle fluidtechnisch abgewandt ist (hierin auch "Transportseite" genannt). Ebenso kann man anstatt von einem Unterdruck auch von einer Druckdifferenz zwischen Transport- und Saugseite sprechen, wobei der Druck an der Transportseite größer ist, als an der Saugseite. Wird ein Transportobjekt auf die Transportseite im Bereich wenigstens eines Vakuumkanals aufgebracht, bewirkt diese Druckdifferenz, dass das Transportobjekt an die Transportseite angepresst bzw. angesaugt wird. Wird der Bandkörper dann angetrieben, wird das Transportobjekt durch Haftreibung mitbewegt bzw. transportiert.

Aus der JP H07-124 394 A ist ein Ausdehnungsapparat für Kleidung bekannt, der einen Transporttisch mit einem Transportband umfasst, welches einzelne Saugöffnungen aufweist. Unterhalb des Transportbandes ist eine Saugeinrichtung vorgesehen, welche drei nebeneinander angeordnete Saugkammern umfasst. Jede dieser Saugkammern ist mit einer Saugleitung und jeweils einer Vakuumpumpe verbunden. In jeder Saugleitung, die zur Saugkammer führt, ist ein Unterdrucksensor vorgesehen. Durch eine Steuerung wird der erfasste Unterdruck des jeweiligen Unterdrucksensors erfasst, sodass abhängig von dem erfassten Unterdruck in der Saugleitung jede Saugkammer angesteuert wird.

Aus der JP H04-85 234 A ist ein Vakuumtransportband bekannt. Unterhalb des Transportbands ist eine Saugbox mit zwei Saugkammern zugeordnet. Ausgehend von einer Vakuumpumpe wird mit einer Steuerung jeweils ein Steuerventil in einer Saugleitung angesteuert, wobei die Saugleitung in die jeweilige Saugkammer führt. Zur Erfassung eines Druckes in der Saugkammer ist jeweils ein Sensor vorgesehen, die mit der Steuerung verbunden sind.

Die EP 2 431 307 A2 beschreibt bspw. ein solches Vakuumtransportband zum Transportieren von flächigen Gegenständen, etwa aus Papier oder Kartonagen. Zu diesem Zweck ist eine Vakuumquelle vorgesehen. Die Vakuumquelle erzeugt einen Unterdruck, der über ein Ventil in eine Vakuumkammer des Transportbands eingespeist wird. Das Ventil kann einen binären Betriebszustand annehmen, wobei entweder der Unterdruck zur Aufnahme des flächigen Gegenstands in der Vakuumkammer erzeugt wird oder nicht. Alternativ kann der Gegenstand auch aktiv vom Vakuumtransportband gelöst werden, indem ein Abwurfimpuls mittels Druckluft anstatt eines Unterdrucks erzeugt wird.

Vakuumtransportbänder haben im Allgemeinen den Nachteil, dass sie vergleichsweise viel elektrische Energie benötigen, wie etwa zum Betrieb der Vakuumquelle und für den Antrieb des Bandkörpers.

Der Erfindung liegt daher die Aufgabe zugrunde, ein alternatives Vakuumtransportband vorzuschlagen, das effizient ist und insbesondere wenig Energie benötigt.

Die Aufgabe wird durch die Gegenstände der unabhängigen Patentansprüche 1, 7 und 10 gelöst. Bevorzugte Ausführungsformen der Erfindung ergeben sich aus den in den Unteransprüchen genannten Merkmalen und weiterhin auch aus der vorliegenden Offenbarung als Ganzes.

Ein erster Aspekt der Erfindung betrifft ein Verfahren zum Betrieb eines Vakuumtransportbands, das über eine oder mehrere Vakuumkammern geführt wird, wobei Vakuumkanäle des Vakuumtransportbands beim Passieren der jeweiligen Vakuumkammer von dieser mit einem Kammerunterdruck versorgt werden, der durch eine zentrale Unterdruckquelle gespeist wird, die ihre Saugleistung in eine oder mehrere Unterdruckleitungen einleitet, welche wiederum jeweils mit einer korrespondierenden Vakuumkammer wirkverbunden sind.

Erfindungsgemäß ist vorgesehen, dass wenigstens eine Unterdruckleitung mit einem Drosselelement ausgestattet ist, der Kammerunterdruck in der korrespondierenden Vakuumkammer mit einem Drucksensor gemessen und mit dem Drosselelement geregelt wird und dass ein Transportobjekt auf das Vakuumtransportband aufgebracht wird, welches wenigstens einen Vakuumkanal verdeckt und dadurch eine Erhöhung des Kammerunterdrucks der korrespondierenden Vakuumkammer bewirkt, wenn der verdeckte Vakuumkanal die korrespondierende Vakuumkammer passiert und dass der Kammerunterdruck der korrespondierenden Vakuumkammer dann wie folgt geregelt wird:
- Verringerung des Kammerunterdrucks, wenn er infolge der Erhöhung oberhalb eines vorgegebenen Halteunterdrucks für das Transportobjekt liegt; oder
- weitere Erhöhung, wenn er nach der Erhöhung noch unterhalb des vorgegebenen Halteunterdrucks liegt.

Den für die Ausführung der Erfindung erforderlichen vorgegebenen Haltedruck kann der Fachmann anhand des zu transportierenden Transportobjekts bzw. der Transportobjekte auslegen (insb. nach Anzahl, Masse, Geometrie, Werkstoff bzw. Reibungseigenschaften des Transportobjekts). Ferner wird der Fachmann für die Auslegung die Beschaffenheit des Vakuumbands an dessen Transportseite (insb. Geometrie und Werkstoff bzw. Reibungseigenschaften) sowie dynamischer Faktoren (insb. Beschleunigungswerte beim Transport oder während Bearbeitungsschritten innerhalb einer Produktionsanlage) heranziehen. Ziel der Auslegung ist, dass das Transportobjekt während des Transports oder auch während einer Bearbeitung sicher durch den Kammerunterdruck gehalten wird.

Der Begriff des Unterdrucks, der auch als Saugwirkung bezeichnet werden kann, impliziert eine Betrachtung der Differenz gegenüber einem Referenzdruck, der als Normaldruck angesehen wird. Der Kammerunterdruck bzw. die Kammersaugwirkung wird hierbei stets gegenüber der Umgebung des Vakuumtransportbands betrachtet, die in der Regel unter Atmosphärendruck (Normaldruck) steht. Liegt dieser Referenzdruck der Umgebung (R) bspw. bei 1 bar, so wird alles was unterhalb von 1 bar im Intervall ]1 bar; 0 bar] liegt, als Unterdruck angesehen. Technisch praktisch bewegt sich der Kammerunterdruck also im offenen Intervall ]R; 0 bar[, da 0 bar praktisch nicht erreicht werden können. Der Kammerunterdruck nimmt somit auf einer absoluten Skala immer positive Werte ein. Dabei sei angemerkt, dass unter einer "Erhöhung" des Kammerunterdrucks auf einer absoluten Skala immer eine betragsmäßige Verkleinerung seines Werts verstanden werden muss, da ein höherer "Unterdruck" eine höhere Differenz zum Referenzdruck impliziert. Ein Beispiel einer Erhöhung des Kammerunterdrucks auf einer absoluten Skala wäre, bei einem konstanten Referenzdruck von 1 bar, eine betragsmäßige Verkleinerung des Kammerunterdrucks von 0,8 bar auf 0,7 bar. Mit anderen Worten hätte sich hier die Differenz zum Referenzdruck von 0,2 bar auf 0,3 bar erhöht. Bei einer beispielhaften Verringerung des Kammerunterdrucks verhält sich das Ganze entsprechend umgekehrt. In der Praxis wird häufig auch eine relative Skala für die Werte eines Unterdrucks verwendet, wobei ausgehend vom Referenzdruck die Druckdifferenz explizit mit negativem Vorzeichen angegeben wird. Durch das negative Vorzeichen muss die "Erhöhung" des Kammerunterdrucks auf einer relativen Skala immer als betragsmäßige Vergrößerung seines Werts verstanden werden. Bei dem zuvor genannten Beispiel mit dem Referenzdruck von 1 bar würde dieselbe Erhöhung des Kammerunterdrucks auf der relativen Skala wie folgt ausgedrückt werden: Erhöhung von -0,2 bar auf -0,3 bar.

Diese formalistischen Zusammenhänge sind dem Fachmann an sich bekannt und dienen hier lediglich als Hintergrund für eine vereinfachte Betrachtung, wonach eine Erhöhung des Kammerunterdrucks im Kontext der Erfindung auch als Verstärkung der Kammersaugwirkung interpretiert werden kann. Eine Verringerung des Kammerunterdrucks kann entsprechend als Abschwächung der Kammersaugwirkung interpretiert werden.

Der Erfindung liegt nun die Erkenntnis zugrunde, dass der Kammerunterdruck bzw. die Kammersaugwirkung, welche die Vakuumkammer auf das Vakuumtransportband ausübt, sich erhöht, wenn durch Aufbringen eines oder mehrerer Transportobjekte ein oder mehrere Vakuumkanäle verdeckt werden. Da dann weniger Fluid aus der Umgebung in die Vakuumkammer einströmen kann bzw. die Saugleistung der Unterdruckquelle nicht mehr im gleichen Maße in kinetische Energie des Fluides aus der Umgebung umgewandelt wird, muss die Saugleistung der Unterdruckquelle aus Gründen der Energieerhaltung zu einer Erhöhung der potentiellen Energie in der Vakuumkammer führen. Diese potentielle Energie des Fluides in der Vakuumkammer liegt in der technischen Praxis, in der geometrische Höhenunterschiede meist vernachlässigbar sind, insbesondere in Form des Kammerunterdrucks bzw. der Druckdifferenz zwischen Umgebung und Vakuumkammer vor. Zur Energieerhaltung muss sich der Kammerunterdruck folglich entsprechend erhöhen. Dies führt auch dazu, dass das Vakuumtransportband stärker an etwaige Dichtflächen der Vakuumkammer angepresst bzw. angesaugt wird, was wiederum die Reibung zwischen Dichtfläche und Vakuumtransportband erhöht. Infolge dieser erhöhten Reibung, die der Bewegung des Bandkörpers entgegenwirkt, muss auch mehr Antriebsenergie für den Antrieb des Vakuumtransportbands bzw. für den Transport des Transportobjekts aufgewandt werden.

Die vorliegende Erfindung löst dieses Problem dadurch, dass der Kammerunterdruck nach der Erhöhung wieder auf das zum Transport erforderliche und vorher durch den Fachmann festgelegte Maß heruntergeregelt wird. Mit Vorteil wird dadurch die Reibung wieder reduziert, wodurch das Verfahren der Erfindung sehr energieeffizient ist. Es ist auch vorteilhaft, dass Vakuumkammern, die gerade keinen bestimmten Kammerunterdruck zur Sicherung eines Transportobjekts bereitstellen müssen, mit einem sehr kleinen Kammerunterdruck, sozusagen im Leerlauf, betrieben werden können. Dies reduziert die Reibung insgesamt nochmals deutlich. In diesem Fall wird der Kammerunterdruck erst auf den vorgegebenen Halteunterdruck erhöht, wenn ein Transportobjekt die betreffende Vakuumkammer erreicht. Somit ist das erfindungsgemäße Verfahren mit einer Vakuumkammer und insbesondere auch beim Betrieb mehrerer Vakuumkammern besonders energieeffizient.

Die dynamische Regelung des Kammerunterdrucks der Vakuumkammer oder der Vakuumkammern kann mit dem bzw. den Drosselelementen auch besonders aufwandsarm und effektiv erfolgen. Die Saugleistung der Unterdruckquelle muss zu diesem Zweck nicht zwingend selbst verändert werden. Vielmehr kann die Unterdruckquelle bspw. an einem statischen Arbeitspunkt betrieben werden. Bspw. lässt sich eine einzige, ausreichend leistungsstarke zentrale Unterdruckquelle verwenden. In der Regel wird nicht in allen Vakuumkammern gleichzeitig der maximale Kammerunterdruck benötigt. Die zentrale Unterdruckquelle kann daher häufig an einem Arbeitspunkt betrieben werden, der unterhalb ihrer maximalen Leistungsfähigkeit liegt. Dies ist dann besonders energieeffizient. Weiterhin lässt sich die zentrale Unterdruckquelle natürlich auch bedarfsgerecht regeln. Alternativ wäre eine Vielzahl kleiner und ausreichend dynamisch ansteuerbarer Unterdruckquellen erforderlich, die in Summe mit ihrer Peripherie einen deutlich größeren Bauraum belegen würden, als die zentrale Unterdruckquelle. Auch würde die individuelle Regelung diverser einzelner Unterdruckquellen hohe elektrische Verluste in der jeweiligen Steuer- und Leistungselektronik mit sich bringen.

Demgegenüber ist das Verfahren der Erfindung nicht nur sehr energieeffizient, sondern benötigt auch nur einen sehr viel kleineren Bauraum für das verwendete Equipment.

Vorzugsweise wird ein Vakuumtransportband mit einer Vielzahl von Vakuumkammern betrieben, das vorzugsweise eine Vielzahl von Unterdruckleitungen umfasst, die vorzugsweise jeweils mit genau einer korrespondierenden Vakuumkammer wirkverbunden sind. Als Fluid kann in der Praxis meist von Luft ausgegangen werden. Das Fluid kann grundsätzlich aber auch ein anderes Gas oder Gasgemisch sein und im Prinzip sogar ein beliebiges Fluid (bspw. Flüssigkeiten wie Wasser), das die Umgebung bildet.

Die Saugleistung der zentralen Unterdruckquelle wird vorzugsweise konstant gehalten, auch wenn eine Feinregelung oder auch eine zweckmäßige andere Regelung nicht ausgeschlossen ist. Im Wesentlichen bildet jedoch das Drosselelement das Stellglied bzw. bildet dessen Stellung die Stellgröße zur Regelung des Kammerunterdrucks in der jeweiligen Vakuumkammer als Regelgröße. Der Kammerunterdruck wird gemäß den Grundsätzen eines Regelkreises in der jeweiligen Vakuumkammer mit dem jeweiligen Drucksensor gemessen und wie beschreiben individuell geregelt.

In bevorzugter Ausgestaltung des Verfahrens der Erfindung ist vorgesehen, dass der Kammerunterdruck der korrespondierenden Vakuumkammer auf einen Leerlaufdruck geregelt wird, der unterhalb des vorgegebenen Halteunterdrucks liegt, solange die korrespondierende Vakuumkammer nicht von einem verdeckten Vakuumkanal passiert wird.

Vorzugsweise ist der Leerlaufdruck minimal und mit anderen Worten lediglich noch so groß, dass die transportobjektbedingte Erhöhung des Kammerunterdrucks mit dem Drucksensor im Rahmen dessen Empfindlichkeit noch detektierbar ist, wenn ein verdeckter Vakuumkanal bzw. ein Transportobjekt die Vakuumkammer passiert.

Der vorteilhafte Effekt der verminderten Reibung wird so maximal ausgenutzt, da die Reibung bei Leerlaufdruck minimal ist.

In bevorzugter Ausgestaltung des Verfahrens der Erfindung ist vorgesehen, dass der Kammerunterdruck der korrespondierenden Vakuumkammer sich nach Passieren des verdeckten Vakuumkanals wieder verringert, woraufhin der Kammerunterdruck auf den Leerlaufdruck geregelt wird.

Somit kann der vorteilhafte Effekt der verminderten Reibung vor und nach dem Passieren des Transportobjekts bestmöglich ausgenutzt werden.

In bevorzugter Ausgestaltung des Verfahrens der Erfindung ist vorgesehen, dass der Kammerunterdruck der korrespondierenden Vakuumkammer stets auf den vorgegebenen Halteunterdruck geregelt wird.

Auch dies ermöglicht eine Erhöhung der Energieeffizienz gegenüber konventionellen Verfahren, da zumindest keine Überhöhung des Kammerunterdrucks erfolgt. Zudem wird der Regelungsaufwand so geringer gehalten, als beim Einbezug eines Leerlaufdrucks.

In bevorzugter Ausgestaltung des Verfahrens der Erfindung ist vorgesehen, dass eine Position wenigstens eines Transportobjekts mit einem weiteren Sensor erfasst wird.

Die Sicherheit in der Erkennung, wann ein Transportobjekt eine Vakuumkammer erreicht, wird so gesteigert. Auch ist es so prinzipiell möglich, den Leerlaufdruck einer Vakuumkammer soweit zu senken, dass der Drucksensor dies nicht mehr zuverlässig erkennen kann, was dann aber mit dem weiteren Sensor (bspw. einer Kamera, Näherungssensor, o.ä.) kompensiert wird. Auf das Erhöhen des Kammerunterdrucks als Auslöser für den beschriebenen Regelungsablauf kann dann indirekt, also ohne Messung, geschlussfolgert werden, da dies physikalisch bedingt immer erfolgt, sobald ein durch ein Transportobjekt verdeckter Vakuumkanal die Vakuumkammer passiert.

Prinzipiell könnte auch die physikalisch bedingte Verringerung des Kammerunterdrucks nach Passieren der vorangehenden Vakuumkammer als Auslöser für den Regelungsablauf in der nachfolgenden Vakuumkammer herangezogen werden. Dies hätte aber den Nachteil, dass die Verringerung möglicherweise nicht stattfindet bzw. nicht gemessen wird, wenn gleichzeitig ein weiteres Transportobjekt die vorangehende Vakuumkammer erreicht und ein anderes Transportobjekt diese Vakuumkammer gerade verlässt. Der gemessene Kammerunterdruck würde dann in etwa gleichbleiben.

In bevorzugter Ausgestaltung des Verfahrens der Erfindung ist vorgesehen, dass wenigstens ein Transportobjekt sequentiell über aufeinanderfolgende Vakuumkammern geführt wird und der Kammerunterdruck in jeder passierten Vakuumkammer in der beschriebenen Weise geregelt wird.

Es werden vorzugsweise mehrere Transportobjekte geordnet oder ungeordnet in beliebiger Reihenfolge transportiert.

Ein weiterer Aspekt der Erfindung betrifft ein Vakuumtransportband, umfassend:
- eine Vielzahl von Vakuumkanälen;
- eine oder mehrere Vakuumkammern, über welche das Vakuumtransportband führbar ist, sodass die Vakuumkanäle beim Passieren der jeweiligen Vakuumkammer von dieser mit einem Kammerunterdruck versorgt werden können;
- eine zentrale Unterdruckquelle zur Speisung des Kammerunterdrucks, wozu eine oder mehrere Unterdruckleitungen vorgesehen sind, in welche die Unterdruckquelle ihre Saugleistung einleiten kann und welche wiederum jeweils mit einer korrespondierenden Vakuumkammer des Vakuumtransportbands wirkverbunden sind.

Erfindungsgemäß ist vorgesehen, dass wenigstens eine Unterdruckleitung mit einem Drosselelement zur Regelung des Kammerunterdrucks in der korrespondierenden Vakuumkammer ausgestattet ist und die korrespondierende Vakuumkammer mit einem Drucksensor ausgestattet ist, und dass weiterhin ein Steuergerät vorgesehen ist, das dazu ausgebildet ist, den Kammerunterdruck als messbare Regelgröße unter Steuerung des Drosselelements als Stellglied zu regeln.

In bevorzugter Ausgestaltung des Vakuumtransportbands der Erfindung ist vorgesehen, dass es zur Durchführung eines erfindungsgemäßen Verfahrens gemäß der vorliegenden Offenbarung ausgebildet ist. Besonders bevorzugt ist es auch zu diesem Zweck eingerichtet bzw. konfiguriert.

In bevorzugter Ausgestaltung des Vakuumtransportbands der Erfindung ist vorgesehen, dass das Drosselelement eine Drosselklappe umfasst. Die Drosselklappe kann bspw. mit einem Elektromotor verstellt werden, der vorzugsweise von dem Steuergerät angesteuert wird.

Die Vakuumkammer des Vakuumtransportbands weist bevorzugt quer zur Transportrichtung ausgerichtet jeweils Stirnseiten zur Begrenzung der Vakuumkammer auf. In einer oder beiden Stirnseiten der Vakuumkammer ist eine Ansaugöffnung für die Unterdruckleitung vorgesehen, wobei die Ansaugöffnung durch einen lösbaren Verschluss geschlossen ist. Diese Anordnung weist den Vorteil auf, dass in Abhängigkeit der Einbauverhältnisse wahlweise an einer linken oder rechten Stirnseite die Unterdruckleitung angeschlossen werden kann. Auch ist möglich, dass an beiden Stirnseiten jeweils eine Unterdruckleitung anschließbar ist.

Vorteilhafterweise ist in der Vakuumkammer eine Trennwand vorgesehen, welche innerhalb der Vakuumkammer im Abstand zu der Stirnseite mit der Anschlussöffnung positionierbar ist. Insbesondere kann die Trennwand zu der Stirnseite der Vakuumkammer veränderbar sein, an welche die Unterdruckleitung angeschlossen ist. Dadurch kann die Größe der Vakuumkammer veränderbar sein. Insbesondere durch eine Verringerung des Volumens der Vakuumkammer ist ermöglicht, dass bei einer verringerten Leistung der Vakuumpumpe noch ein hinreichender Unterdruck in der Vakuumkammer erzeugt werden kann. Beispielsweise kann die Trennwand in vorbestimmten Abständen positionierbar sein, wobei in quer zur Transportrichtung sich erstreckenden Kammerwänden der Vakuumkammer Nuten oder Vertiefungen vorgesehen sein können, in welcher die Trennwand positionierbar ist.

Ein weiterer Aspekt der Erfindung betrifft eine Produktionsanlage, umfassend ein erfindungsgemäßes Vakuumtransportband gemäß der vorliegenden Offenbarung und/oder ausgebildet zur Durchführung eines erfindungsgemäßen Verfahrens gemäß der vorliegenden Offenbarung. Besonders bevorzugt ist die Produktionsanlage auch zu diesem Zweck eingerichtet.

Die Produktionsanlage kann bspw. dazu dienen, Bearbeitungs- oder Montageoperationen an dem Transportobjekt, wie etwa einem flächigen Teil, bspw. einem Kartenstreifen, durchzuführen.

Nochmals mit anderen Worten zusammengefasst, betrifft die Erfindung ein Vakuumtransportband, bei dem sich durch Auflegen eines Transportobjekts ein zum Halten des Transportobjekts erzeugter Unterdruck erhöht. Hierdurch entsteht eine erhöhte Reibung beim Antrieb des Vakuumtransportbands, da es stärker in Richtung der mechanischen Strukturen gezogen wird, über die es mit dem Unterdruck versorgt wird. Die erhöhte Reibung wird dadurch kompensiert, dass der Unterdruck erfasst wird und ein für den Unterdruck maßgeblicher Luftvolumenstrom verringert wird.

Nochmals mit anderen Worten zusammengefasst, rührt die Erfindung von der Ausgangslage her, das in bestehenden Anlagen mit nur einer Vakuumkammer gearbeitet wird und/oder der Unterdruck nur manuell fest bzw. statisch eingestellt wird. Die Erfindung löst dabei das Problem von Veränderungen der Reibkräfte am Vakuumband. Die Lösung sieht vor, dass Veränderungen des Unterdrucks beim Auflegen von Kartenstreifen (was ein Bsp. eines Transportobjekts ist) und die damit verbundene Erhöhung der Reibkraft auf das Vakuumband geregelt werden. Es erfolgt eine Erfassung des Unterdrucks und Regelung von Steuerklappen zur Verringerung des Luftvolumens. Dies bietet den Vorteil einer Verringerung des Bauraumes sowie eine Energieeinsparung. Im Kern betrifft die Erfindung also steuerbare Ventilklappen für unterschiedliche Unterdruckbereiche an einem Streifen-Transportband.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und deren skizzenhafter Darstellung erläutert. Hierbei zeigen:
- Figur 1: ein Vakuumtransportband in einer Schnittansicht;
- Figur 2: den Ablauf eines Verfahrens zum Betrieb eines Vakuumtransportbands anhand eines Vakuumtransportbands in einer isometrischen Ansicht; und
- Figur 3: ein Drosselelement für ein Vakuumtransportband.

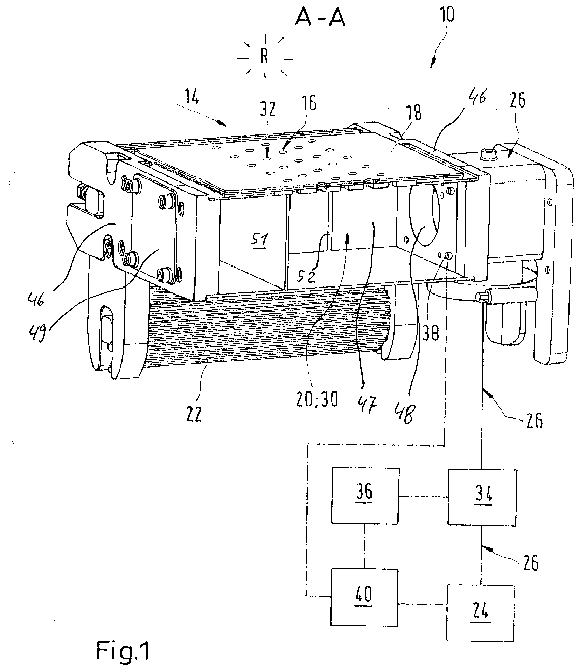

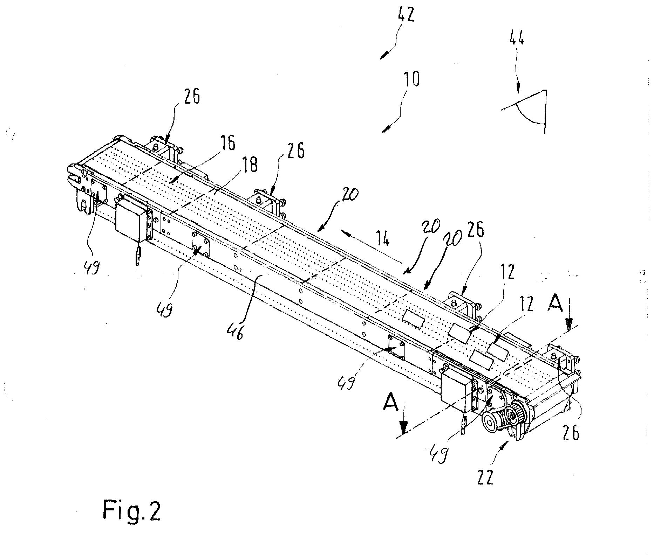

Figur 1 zeigt ein Vakuumtransportband 10 in einer Schnittansicht A-A, wobei die Schnittlinie A in Figur 2 ersichtlich ist. Das Vakuumtransportband 10 dient dem Transport von (in Figur 2) rein exemplarisch angedeuteten Transportobjekten 12 in einer ebenfalls rein exemplarisch illustrierten Transportrichtung 14.

Das Vakuumtransportband 10 umfasst eine Vielzahl von Vakuumkanälen 16, die in den unterschiedlichsten Mustern und Ausprägungen auftreten können. Die gezeigten Muster dienen daher nur der Veranschaulichung und werden in der Praxis vor allem anhand der anzusaugenden Transportobjekte 12 durch den Fachmann ausgestaltet.

Wie in der Schnittansicht in Figur 1 erkennbar ist, verfügt das Vakuumtransportband 10 über einen Bandkörper 18, der über eine Vakuumkammer 20 geführt ist. Er kann dabei, bspw. nach einem Zahnriemenprinzip, angetrieben werden. Diesbezüglich ist hier rein exemplarisch eine verzahnte Spannwalze 22 erkennbar, über die der Bandkörper 18 geführt wird. Wie später noch anhand von Figur 2 näher erläutert wird, umfasst das Vakuumtransportband 10 in dieser Ausführungsform eine Vielzahl von Vakuumkammern 20, welche durch Strichlinien quer zur Transportrichtung 14 schematisch dargestellt sind. Über diese Vakuumkammer 20 kann das Vakuumtransportband 10 geführt werden. In anderen Ausführungsbeispielen, die ansonsten mit dem vorliegenden ganz oder auszugsweise identisch sein können, kann auch nur eine Vakuumkammer 20 vorgesehen sein.

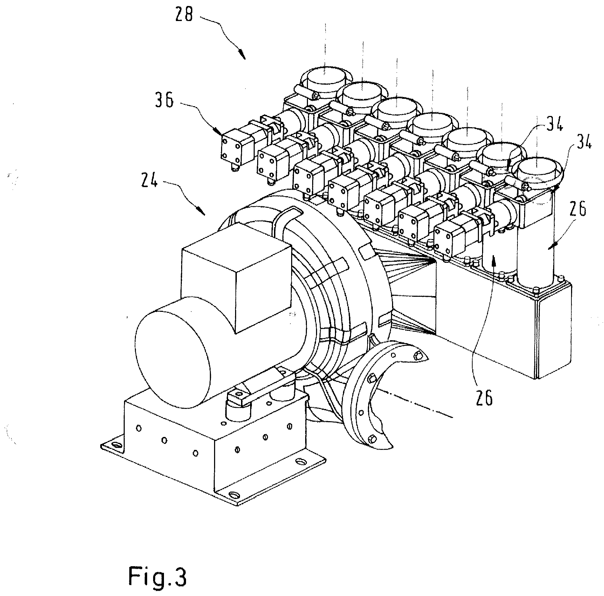

Das Vakuumtransportband 10 umfasst weiterhin eine zentrale Unterdruckquelle 24, die in Figur 3 erkennbar ist. Bei der Unterdruckquelle 24 kann es sich zum Beispiel um eine Saugpumpe handeln. Die Unterdruckquelle 24 dient der Speisung eines Kammerunterdrucks 30 (vgl. Figur 1) in der jeweiligen Vakuumkammer 20. Zu diesem Zweck ist bevorzugt pro Vakuumkammer 20, weiterhin bevorzugt jeweils, eine Unterdruckleitung 26 vorgesehen. Die Unterdruckleitungen 26 sind in den Figuren 1 bis 3 jeweils exemplarisch dargestellt oder prinzipiell angedeutet. Die Unterdruckquelle 24 kann ihre Saugleistung in die Unterdruckleitungen 26 einleiten, woraufhin jeweils eine Unterdruckleitung 26 eine mit ihr korrespondierende Vakuumkammer 20 versorgen kann. In Figur 3 ist dazu exemplarisch ein Verteiler 28 gezeigt, wobei jedoch auch andere Mittel zur Verteilung der Saugleistung denkbar sind.

Wenn, wie im Folgenden anhand von Figur 1 erläutert, ein Vakuumkanal 16 in Transportrichtung 14 eine Vakuumkammer 20 passiert, kann er von dieser mit dem Kammerunterdruck 30 versorgt werden. Der Kammerunterdruck 30 kann gegenüber einem Referenzdruck R der Umgebung erzeugt werden und bewirkt eine Kammersaugwirkung 32 (in Richtung des Pfeils).

Die Figur 1 zeigt eine Schnittansicht der Vakuumkammer 20. Die Vakuumkammer 20 umfasst jeweils parallel zur Transportrichtung 14 ausgerichtete Stirnseiten 46, welche die quer zur Transportrichtung 14 ausgerichteten Kammerwände 47 seitlich begrenzen. Durch die Stirnseiten 46 und die Kammerwände 47 wird eine geschlossene Ventilkammer 20 gebildet. Bevorzugt ist in jeder Stirnseite 46 der Vakuumkammer 20 eine Ansaugöffnung 48 vorgesehen. Diese Ansaugöffnung 48 ist durch einen lösbaren Verschluss 49 geschlossen. Durch die bevorzugt an beiden Stirnseiten 46 vorgesehenen Ansaugöffnungen 48 kann die Unterdruckleitung wahlweise an der rechten oder linken Stirnseite 46 oder an beiden Stirnseiten 46 angeschlossen werden.

In der Vakuumkammer 20 ist bevorzugt zumindest eine Trennwand 51 vorgesehen. Diese Trennwand 51 kann innerhalb der Vakuumkammer 20 in verschiedenen Positionen im Abstand zu der Ansaugöffnung 48 positionierbar sein. Dadurch wird ermöglicht, dass das Volumen der Vakuumkammer 20 reduziert werden kann. Gemäß der Figur 1 ist die Unterdruckleitung 26 an der rechten Stirnseite 46 vorgesehen. Gegenüberliegend zur linken Stirnseite 46, jedoch mit Abstand dazu, ist die Trennwand 51 positioniert. Diese Trennwand 51 schließt mit der linken Reihe der Vakuumkanäle 16 ab, d. h., dass das Kammervolumen der Vakuumkammer 20 reduziert ist. Die Trennwand 51 kann in einer vorgegebenen Rasterung veränderbar sein. Diese Rasterung kann durch beispielsweise zumindest eine Vertiefung 52 der Kammerwand 47 gebildet sein.

Das Vakuumtransportband 10 zeichnet sich nun dadurch aus, dass wenigstens eine Unterdruckleitung 26, bevorzugt aber optional alle Unterdruckleitungen 26, mit einem Drosselelement 34 ausgestattet sind. In Figur 1 ist das Drosselelement 34, nebst einem optionalen Aktuator 36 zur automatischen Einstellung, abstrakt als Funktionsbox dargestellt. Der Aktuator 36 kann das Drosselelement 34 verstellen, was durch eine Strich-Punkt-Linie angedeutet ist, welche jeweils zusammenwirkenden Funktionsboxen verbindet. Die Strich-Punkt-Linien deuten Signal- und/oder Energieflüsse an. Ohne einen solchen Aktuator 36 kann das Drosselelement 34 auch auf andere dem Fachmann bekannte Weise eingestellt werden, bspw. manuell. Das Drosselelement 34 ist fluidtechnisch zwischen der Unterdruckquelle 24 und der Vakuumkammer 20 in die Unterdruckleitung 26 integriert.

In Figur 3 sind exemplarisch zwei solche Drosselelemente 34 durch Strich-Punkt-Linien innerhalb der jeweiligen Unterdruckleitung 26 angedeutet und zeigen rein zur Veranschaulichung unterschiedliche Stellzustände. Die Drosselelemente 34 können z.B. jeweils eine Drosselklappe umfassen. Die Drosselklappen können bspw. jeweils durch einen Elektromotor als Aktuator 36 ansteuerbar sein, wie in Figur 3 exemplarisch bezeichnet und dargestellt ist. Die Anzahl der Unterdruckleitungen 26 mit bspw. jeweils einem Drosselelement 34 und bspw. jeweils einem Aktuator 36 entspricht bevorzugt der Anzahl von Vakuumkammern 20.

Das Drosselelement 34 dient der Regelung des Kammerunterdrucks 30 in der, mit der jeweiligen Unterdruckleitung 26 korrespondierenden, Vakuumkammer 20. Die korrespondierende Vakuumkammer 20 selbst ist mit einem Drucksensor 38 ausgestattet (siehe exemplarische Anordnung in Figur 1), mit dem der Kammerunterdruck 30 messbar ist.

Um den Kammerunterdruck 30 zu regeln, ist weiterhin ein Steuergerät 40 vorgesehen. In Figur 1 ist das Steuergerät 40 abstrakt als Funktionsbox dargestellt. Das Steuergerät 40 ist dazu ausgebildet, den Kammerunterdruck 30 als messbare Regelgröße unter Steuerung des Drosselelements 34 als Stellglied zu regeln. Die Wirkverbindungen zwischen dem Steuergerät 40 und dem Drucksensor 38 sowie zwischen dem Steuergerät 40 und dem Aktuator 36 bzw. dem Drosselelement 34 sind in Figur 1 jeweils durch eine Strich-Punkt-Linie angedeutet. Optional kann dasselbe Steuergerät 40 auch, wie angedeutet, die Unterdruckquelle 24 steuern bzw. regeln.

Besonders bevorzugt ist das Vakuumtransportband 10 zur Durchführung eines Verfahrens zum Betrieb eines Vakuumtransportbands ausgebildet und eingerichtet, das im Folgenden anhand von Figur 2 näher beschrieben wird.

Figur 2 zeigt den Ablauf eines solchen Verfahrens rein exemplarisch anhand des Vakuumtransportbands 10 aus Figur 1, das hier in isometrischer Ansicht ohne Schnitt gezeigt ist. Ferner optional und rein exemplarisch, ist das Vakuumtransportband 10 in Figur 2 in eine nicht weiter dargestellte Produktionsanlage 42 integriert und soll dort Transportobjekte 12, wie etwa Kartenstreifen, zwischen verschiedenen Bearbeitungsstationen transportieren.

In dem Verfahren zum Betrieb des Vakuumtransportbands 10, wird dieses über die Vakuumkammern 20 geführt. In Figur 2 sind rein exemplarisch vier Vakuumkammern 20 angedeutet, die jedoch durch den Bandkörper 18 verdeckt sind (vgl. Figur 1). Erkennbar ist dies bspw. daran, dass vier Unterdruckleitungen 26 an das Vakuumtransportband 10 angeschlossen sind. Bevorzugt hat der in Figur 3 gezeigte Verteiler 28, wenn er mit einem solchen exemplarischen Vakuumtransportband 10 aus Figur 2 kombiniert wird, ebenfalls vier Ausgänge.

Weiterhin in Figur 2 erkennbar sind die Vakuumkanäle 16, die über das Vakuumtransportband 10 verteilt sind. Der Transport der Transportobjekte 12 erfolgt in Transportrichtung 14. Beim Passieren der jeweiligen Vakuumkammer 20 werden die Vakuumkanäle 16, welche das jeweilige Transportobjekt 12 halten bzw. ansaugen, von der passierten Vakuumkammer 20 mit dem in ihr herrschenden Kammerunterdruck 30 versorgt (vgl. Figur 1).

Der Kammerunterdruck 30 wird durch die zentrale Unterdruckquelle 24 gespeist, die rein exemplarisch wie in Figur 3 beschrieben ausgebildet sein kann. Die Unterdruckquelle 24 leitet ihre, vorzugsweise konstante, Saugleistung in die Unterdruckleitungen 26 ein. Die Unterdruckleitungen 26 sind wiederum, wie beschrieben, jeweils mit einer korrespondierenden Vakuumkammer 20 wirkverbunden.

Werden die Transportobjekte 12 auf das Vakuumtransportband 10 aufgebracht, so verdecken sie in der Regel eine Vielzahl von Vakuumkanälen 16, wie in Figur 2 illustriert. Hierdurch kommt es zu einer Erhöhung des Kammerunterdrucks 30 in der korrespondierenden Vakuumkammer 20, die den jeweiligen verdeckten Vakuumkanal 16 versorgt. Dies ist solange der Fall, bis der bzw. die verdeckten Vakuumkanäle 16 die korrespondierende Vakuumkammer 20 passiert haben. Der Kammerunterdruck 30 in der korrespondierenden Vakuumkammer 20 wird mit dem Drucksensor 38 gemessen. Die beschriebene Erhöhung des Kammerunterdrucks 30 wird somit detektiert oder kann ergänzend oder alternativ auf andere Weise erkannt oder angenommen werden.

Wenn die Erhöhung des Kammerunterdrucks 30 vorliegt, wird der Kammerunterdruck 30 der korrespondierenden Vakuumkammer 20, vorzugsweise über das Steuergerät 40, wie folgt geregelt:
Liegt der Kammerunterdruck 30 nach der Erhöhung oberhalb eines vorgegebenen Halteunterdrucks für das Transportobjekt 12, so wird er wieder auf den vorgegebenen Halteunterdruck heruntergeregelt. Dies kann bspw. dadurch erfolgen, dass das Steuergerät 40 das Drosselelement 34 der betreffenden Vakuumkammer 20 so ansteuert, dass ein Strömungsquerschnitt der damit korrespondierenden Unterdruckleitung 26 strömungstechnisch verengt wird. Der Kammerunterdruck 30 liegt nach der Erhöhung oberhalb des vorgegebenen Halteunterdrucks, wenn er vor der Erhöhung bereits auf den vorgegebenen Halteunterdruck eingestellt war. Dies kann bspw. während des operativen Betriebs der Fall sein, wenn regelmäßig Transportobjekte 12 transportiert werden.

Es kann aber auch sein, dass der Kammerunterdruck 30 nach der Erhöhung noch unterhalb des vorgegebenen Halteunterdrucks liegt. Dies kann z.B. dann der Fall sein, wenn er zuvor auf einen sehr geringen Kammerunterdruck 30 eingestellt war. Dies kann bspw. während einer Anlaufphase zu Beginn des operativen Betriebs der Fall sein, wenn die ersten Transportobjekte 12 transportiert werden sollen. In solchen Fällen erfolgt nach der transportobjektbedingten Erhöhung des Kammerunterdrucks 30 noch eine weitere Erhöhung im Wege der Regelung, sodass sich der vorgegebene Halteunterdruck einstellt.

Ein solcher initial sehr geringer Kammerunterdruck 30 kann auch als Leerlaufdruck bezeichnet werden. Bevorzugt wird der Kammerunterdruck 30 der korrespondierenden Vakuumkammer 20 auf den Leerlaufdruck geregelt, der unterhalb des vorgegebenen Halteunterdrucks liegt, solange die korrespondierende Vakuumkammer 20 nicht von einem verdeckten Vakuumkanal 16 passiert wird.

Auf die beschriebenen unterschiedlichen Betriebsweisen lässt sich Energie einsparen, da das Vakuumtransportband 10 nur dann und in dem Ausmaß mit dem Kammerunterdruck 30 versorgt wird, der zum Transport der Transportobjekte 12 auch erforderlich ist.

An diesen Leitgedanken anknüpfend ist es bevorzugt, dass, wenn der Kammerunterdruck 30 der korrespondierenden Vakuumkammer 20 sich nach Passieren des verdeckten Vakuumkanals 16 wieder verringert, der Kammerunterdruck 30 (wieder) auf den Leerlaufdruck geregelt wird.

Alternativ kann der Kammerunterdruck 30 der korrespondierenden Vakuumkammer 20 auch stets auf den vorgegebenen Halteunterdruck geregelt werden.

Optional kann eine Position eines oder mehrerer Transportobjekte 12, alternativ oder ergänzend zur indirekten Erkennung über die Erhöhung des Kammerunterdrucks 30, auch mit einem weiteren Sensor 44 erfasst werden. Bei dem weiteren Sensor 44 kann es sich bspw. um eine Kamera oder einen anderen geeigneten Sensor handeln. Damit kann z.B. die Position des Transportobjekts 12 auf dem Vakuumtransportband 10 gemessen werden und auf die Erhöhung des Kammerunterdrucks 30 geschlussfolgert werden, wenn das Transportobjekt 12 die jeweilige Vakuumkammer 20 erreicht.

Zum Transport einer Vielzahl von Transportobjekten 12 werden diese vorzugsweise, wie in Figur 2 dargestellt, sequentiell über aufeinanderfolgende Vakuumkammern 20 geführt. Der Kammerunterdruck 30 in jeder passierten Vakuumkammer 20 wird dabei in der beschriebenen Weise geregelt.

### Bezugszeichenliste

- 10: Vakuumtransportband
- 12: Transportobjekt
- 14: Transportrichtung
- 16: Vakuumkanal
- 18: Bandkörper
- 20: Vakuumkammer
- 22: Spannwalze
- 24: Unterdruckquelle
- 26: Unterdruckleitung
- 28: Verteiler
- 30: Kammerunterdruck
- 32: Kammersaugwirkung
- 34: Drosselelement
- 36: Aktuator
- 38: Drucksensor
- 40: Steuergerät
- 42: Produktionsanlage
- 44: weiterer Sensor
- 46: Stirnseite
- 47: Kammerwand
- 48: Ansaugöffnung
- 49: Verschluss
- 51: Trennwand
- 52: Vertiefung
- R: Referenzdruck

## Patentansprüche

1. Verfahren zum Betrieb eines Vakuumtransportbands (10), das über eine oder mehrere Vakuumkammern (20) geführt wird, wobei Vakuumkanäle (16) des Vakuumtransportbands (10) beim Passieren der jeweiligen Vakuumkammer (20) von dieser mit einem Kammerunterdruck (30) versorgt werden, der durch eine zentrale Unterdruckquelle (24) gespeist wird, die ihre Saugleistung in eine oder mehrere Unterdruckleitungen (26) einleitet, welche wiederum jeweils mit einer korrespondierenden Vakuumkammer (20) wirkverbunden sind,
**dadurch gekennzeichnet, dass** wenigstens eine Unterdruckleitung (26) mit einem Drosselelement (34) ausgestattet ist, der Kammerunterdruck (30) in der korrespondierenden Vakuumkammer (20) mit einem Drucksensor (38) gemessen und mit dem Drosselelement (34) geregelt wird,
dass ein Transportobjekt (12) auf das Vakuumtransportband (10) aufgebracht wird, und vor oder mit dem Erreichen der Vakuumkammer (20) ein vorgegebener Halteunterdruck angesteuert wird, wobei durch den wenigstens einen verdeckten Vakuumkanal (16) eine Erhöhung des Kammerunterdrucks (30) der korrespondierenden Vakuumkammer (20) bewirkt wird, wenn der verdeckte Vakuumkanal (16) die korrespondierende Vakuumkammer (20) passiert und dass der aktuell wirkende Kammerunterdruck (30) der korrespondierenden Vakuumkammer (20) dann wie folgt auf den vorgegebenen Halteunterdruck geregelt wird:
- Verringerung des Kammerunterdrucks (30), wenn er infolge der Erhöhung oberhalb eines vorgegebenen Halteunterdrucks für das Transportobjekt (12) liegt; oder
- weitere Erhöhung des Kammerunterdrucks (30), wenn er infolge der Erhöhung noch unterhalb des vorgegebenen Halteunterdrucks für das Transportobjekt (12) liegt.

2. Verfahren nach Anspruch 1, **dadurch gekennzeichnet, dass** der Kammerunterdruck (30) der korrespondierenden Vakuumkammer (20) auf einen Leerlaufdruck geregelt wird, der unterhalb des vorgegebenen Halteunterdrucks liegt, solange die korrespondierende Vakuumkammer (20) nicht von einem verdeckten Vakuumkanal (16) passiert wird.

3. Verfahren nach Anspruch 2, **dadurch gekennzeichnet, dass** der Kammerunterdruck (30) der korrespondierenden Vakuumkammer (20) sich nach Passieren des verdeckten Vakuumkanals (16) wieder verringert, woraufhin der Kammerunterdruck (30) auf den Leerlaufdruck geregelt wird.

4. Verfahren nach Anspruch 1, **dadurch gekennzeichnet, dass** der Kammerunterdruck (30) der korrespondierenden Vakuumkammer (20) stets auf den vorgegebenen Halteunterdruck geregelt wird.

5. Verfahren nach einem der vorhergehenden Ansprüche, **dadurch gekennzeichnet, dass** eine Position wenigstens eines Transportobjekts (12) mit einem weiteren Sensor (44) erfasst wird.

6. Verfahren nach einem der vorhergehenden Ansprüche, **dadurch gekennzeichnet, dass** wenigstens ein Transportobjekt (12) sequentiell über aufeinanderfolgende Vakuumkammern (20) geführt wird und der Kammerunterdruck (30) in jeder passierten Vakuumkammer (20) in der beschriebenen Weise geregelt wird.

7. Vakuumtransportband (10), umfassend:
- eine Vielzahl von Vakuumkanälen (16);
- eine oder mehrere Vakuumkammern (20), über welche das Vakuumtransportband (10) führbar ist, sodass die Vakuumkanäle (16) beim Passieren der jeweiligen Vakuumkammer (20) von dieser mit einem Kammerunterdruck (30) versorgt werden können;
- eine zentrale Unterdruckquelle (24) zur Speisung des Kammerunterdrucks (30), wozu eine oder mehrere Unterdruckleitungen (26) vorgesehen sind, in welche die Unterdruckquelle (24) ihre Saugleistung einleiten kann und welche wiederum jeweils mit einer korrespondierenden Vakuumkammer (20) des Vakuumtransportbands (10) wirkverbunden sind,
**dadurch gekennzeichnet, dass** wenigstens eine Unterdruckleitung (26) mit einem Drosselelement (34) zur Regelung des Kammerunterdrucks (30) in der korrespondierenden Vakuumkammer (20) ausgestattet ist und die korrespondierende Vakuumkammer (20) mit einem Drucksensor (38) ausgestattet ist, und dass weiterhin ein Steuergerät (40) vorgesehen ist, das dazu ausgebildet ist, den Kammerunterdruck (30) der korrespondierenden Vakuumkammer (20) als messbare Regelgröße unter Steuerung des Drosselelements (34) als Stellglied, welches der korrespondierenden Vakuumkammer (20) zugeordnet ist, zu regeln.

8. Vakuumtransportband (10) nach Anspruch 7, **dadurch gekennzeichnet, dass** es zur Durchführung eines Verfahrens nach einem der Ansprüche 1 bis 6 ausgebildet ist.

9. Vakuumtransportband (10) nach einem der Ansprüche 7 bis 8, **dadurch gekennzeichnet, dass** das Drosselelement (34) eine Drosselklappe umfasst.

10. Vakuumtransportband (10) nach einem der Ansprüche 7 bis 9, **dadurch gekennzeichnet, dass** die Vakuumkammer (20) parallel zur Transportrichtung ausgerichtete Stirnseiten (46) zur Begrenzung der Vakuumkammer (20) aufweist, und in einer oder beiden Stirnseiten (46) jeweils eine Ansaugöffnung (48) für die Unterdruckleitung (26) vorgesehen ist, wobei die Ansaugöffnung (48) jeweils durch einen lösbaren Verschluss (49) geschlossen ist.

11. Vakuumtransportband (10) nach einem der Ansprüche 7 bis 10, **dadurch gekennzeichnet, dass** in der Vakuumkammer (20) zumindest eine Trennwand (51) vorgesehen ist, welche innerhalb der Vakuumkammer (20) im Abstand veränderbar zu der Stirnseite (46) mit der Ansaugöffnung (48) positionierbar ist, insbesondere zu der Stirnseite (46), an welcher die Unterdruckleitung (26) angeschlossen ist.

12. Produktionsanlage (42), umfassend ein Vakuumtransportband (10) nach einem der Ansprüche 7 bis 11 und/oder ausgebildet zur Durchführung eines Verfahrens nach einem der Ansprüche 1 bis 6.
